# EUROPÄISCHE PATENTANMELDUNG

(11) **EP 2 893 802 A2**
(43) Veröffentlichungstag der Anmeldung: **15.07.2015**
(21) Anmeldenummer: 14003667.4
(22) Anmeldetag: 30.10.2014
(51) Int. Cl.: A01K 1/02

(54) **ABFERKELNISCHE**

(30) Priorität: 05.11.2013 DE 102013018550
(71) Anmelder: Dahlke, Gerd, 31860 Emmerthal (DE)
(72) Erfinder: Dahlke, Gerd, 31860 Emmerthal (DE)

(57) **Zusammenfassung**

Ein Nischenendteil ist gezeichnet, welches, in geöffneter Form, den Eingang zur Abferkelbucht darstellt. Zum Öffnen und Schließen des Eingangs werden die beiden halbseitigen Eingangstüren (H) innerhalb der Türschubhülsen (G) mit waagerechten Bewegungen hin- und hergeschoben. Dazu werden die abgeschwächt rundgebogenen Schließungsrohre zum Schließen bis an den Durchschubendpunkt (J) geschoben, oder zum Öffnen des Eingangs, die zweiteiligen Türen (H) bis an den Rahmen (F)geschoben. Zum Erleichtern der Durchschubbewegung sind die Türschubhülsen nach außen angeschrägt. Die Türschubhülsen (G) befinden sich am Endteilrahmen in versetzter Form (oben aussen, unten innen), wodurch eine Schrägstellung entsteht, die in die Bucht hineinragt.
Das Aufhängerohr soll die Ablegeschwinge in vorgesehener Höhe halten. Das Aufhängerohr ist waagerecht am Endteilrahmen angeschweißt. Zur Stabilitätsunterstützung kommt von unten senkrecht das Kurzrohr (B). Die Ablegeschwinge benötigt zwei Führungspunkte, damit es nicht zum Verkanten in der Bewegung kommt. Diese sind mit dem Bolzenanschlagspunkt (E) und der Kurzrohraufhängung (A) gegeben. Der waagerecht eingeführte Bolzenstecker (D) wird durch die Kurzrohraufhängung und das Ablegeschwingeendstück geschoben, bis an den Bolzenanschlagspunkt (E), und dann mittels Stecksplint fixiert.

## Beschreibung

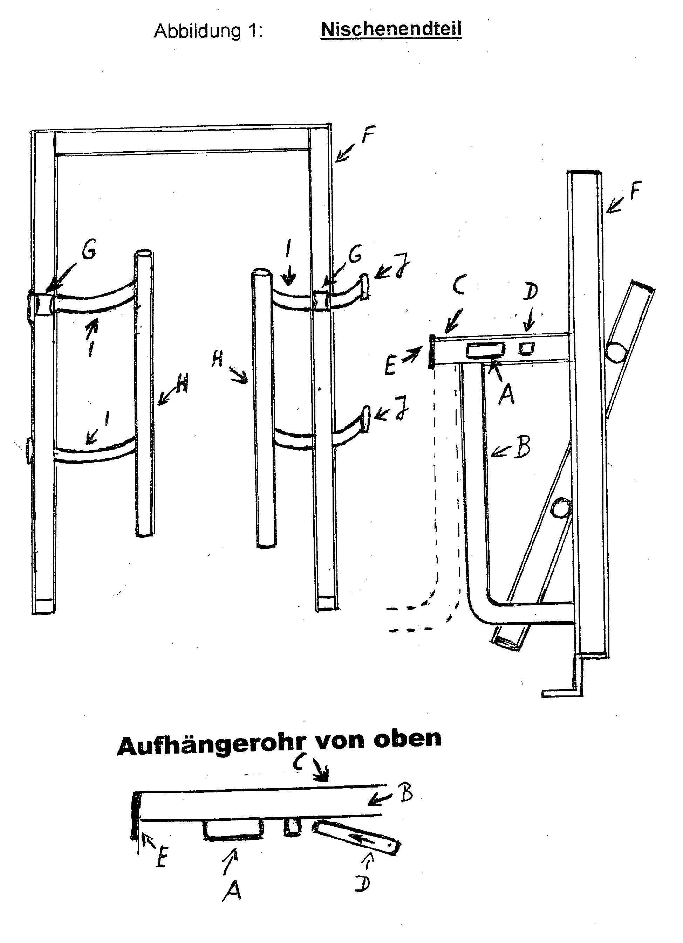

Auf der **Abbildung 1** ist das Nischenendteil gezeichnet, welches, in geöffneter Form, den Eingang zur Abferkelbucht darstellt. Zum Öffnen und Schließen des Eingangs werden die beiden halbseitigen Eingangstüren (H) innerhalb der Türschubhülsen (G) mit waagerechten Bewegungen hin- und hergeschoben. Dazu werden die abgeschwächt rundgebogenen Schließungsrohre zum Schließen bis an den Durchschubendpunkt (J) geschoben, oder zum Öffnen des Eingangs, die zweiteiligen Türen (H) bis an den Rahmen (F)geschoben. Zum Erleichtern der Durchschubbewegung sind die Türschubhülsen nach außen angeschrägt. Die Türschubhülsen (G) befinden sich am Endteilrahmen in versetzter Form (oben aussen, unten innen), wodurch eine Schrägstellung entsteht, die in die Bucht hineinragt.

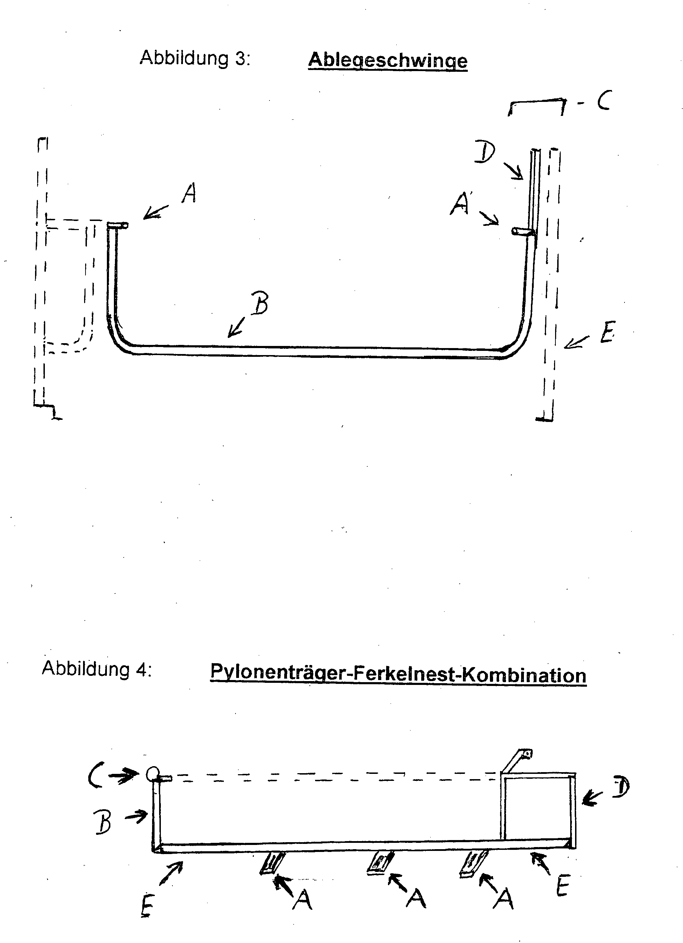

Das Aufhängerohr soll die Ablegeschwinge (Abb. 3) in vorgesehener Höhe halten. Das Aufhängerohr ist waagerecht am Endteilrahmen angeschweißt. Zur Stabilitätsunterstützung kommt von unten senkrecht das Kurzrohr (B). Die Ablegeschwinge benötigt zwei Führungspunkte, damit es nicht zum Verkanten in der Bewegung kommt. Diese sind mit dem Bolzenanschlagspunkt (E) und der Kurzrohraufhängung (A) gegeben. Der waagerecht eingeführte Bolzenstecker (D) wird durch die Kurzrohraufhängung und das Ablegeschwingeendstück geschoben, bis an den Bolzenanschlagspunkt (E), und dann mittels Stecksplint fixiert.

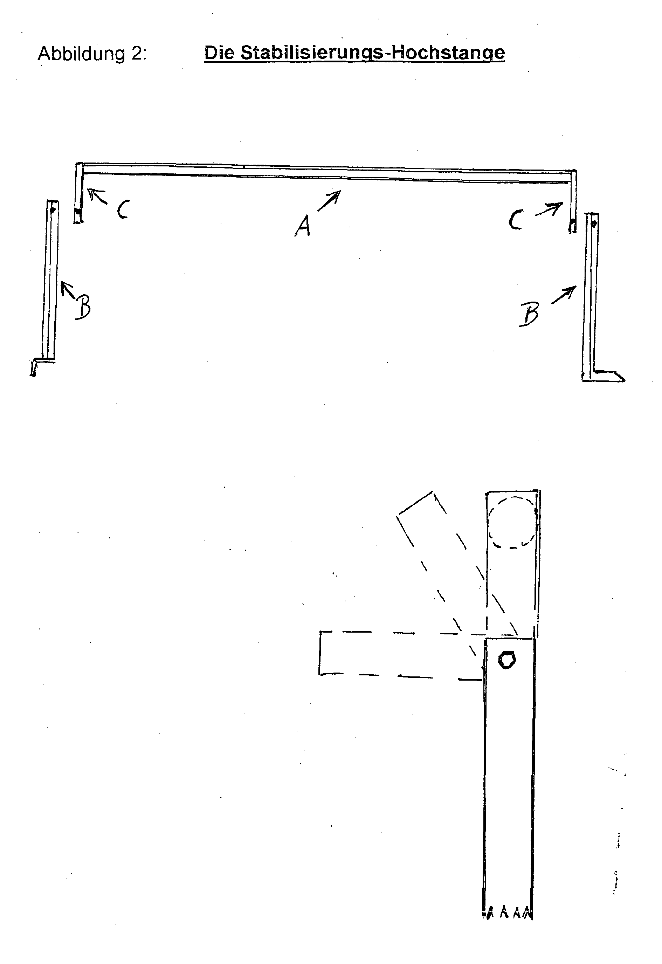

Die **Abbildung 2** zeigt die Stabilisierungs-Hochstange. Diese ist notwendig, damit das Nischenvorderteil und das Nischenendteil bewegunglos bleiben und dadurch die dazwischen befindlichen Ablegeschwingen sich unverkantet bewegen können. Die Stabilisierungs-Hochstande ist jetzt dreiteilig, um auf unterschiedliche Stalldeckenhöhen reagieren zu können. Das senkrechte Winkeleisen (B links) wird am Nischenvorderteil angebracht, das senkrechte Winkeleisen (B rechts) wird am Nischenendteil angebracht.

Das Hochstangenteil (Af) hat an den Endpunkten jeweils ein Flacheisen (C). Mittels einer Schraube werden die drei Teile rechts und links verbunden. Um den Drehpunkt der Schraube kann die Stabilisierungs-Hochstange in der Höhe verstellt werden.

Die **Abbildung 3** zeigt die Ablegeschwinge. Diese besteht bis zu den Aufhängepunkten (A) aus einem einteiligen Rohr. Durch die Einteiligkeit wurde an den 90 Grad-Rundungen die Quetschgefahr gegenüber Ferkeln genommen. Links ist die Ablegeschwinge durch eine waagerechte Hülse (A) am Nischenendteil befestigt. Rechts ist die Ablegeschwinge durch eine waagerechte Hülse (A) am Frontrahmen (E) befestigt. Die Fortsetzung der Ablegeschwinge oberhalb der Befestigungshülse (A) erfolgt nach oben mit einem stabilen Bewegungsdruck-Winkeleisen, um die Bewegungskräfte der zwei Ablegeschwingen aufzufangen.

Die **Abbildung 4** zeigt die Pylonenträger-Ferkelnest-Kombination. Da der Pylonenträger sowieso an der Ferkelnestseite angebracht werden muss, ist die Kombination mit dem Ferkelnest sinnvoll, da eine größere Ferkelnest-Abdeckungs-Stabilität erreicht wird. Der Pylonenträger besteht aus einem Winkelrahmen, der in drei Funktionsabsichten unterteilt ist. Der Bereich (E) ist stallbodennahe angebracht und hat drei Aufnahmeflacheisen (A) für die Einzelpylonen. Im D-Bereich befindet sich durch das Metall-Viereck der Schutzraum für eine Wärmelampe. Der B-Bereich sorgt für die Auflagefläche der durchsichtigen Ferkelnestabdeckung. Diese Ferkelnestabdeckung wird am Punkt C eingeklinkt, direkt an der Buchtentrennwand. Zum Öffnen und Erreichen der Ferkel wird an Punkt C aufgeklinkt und über die Länge B angehoben.

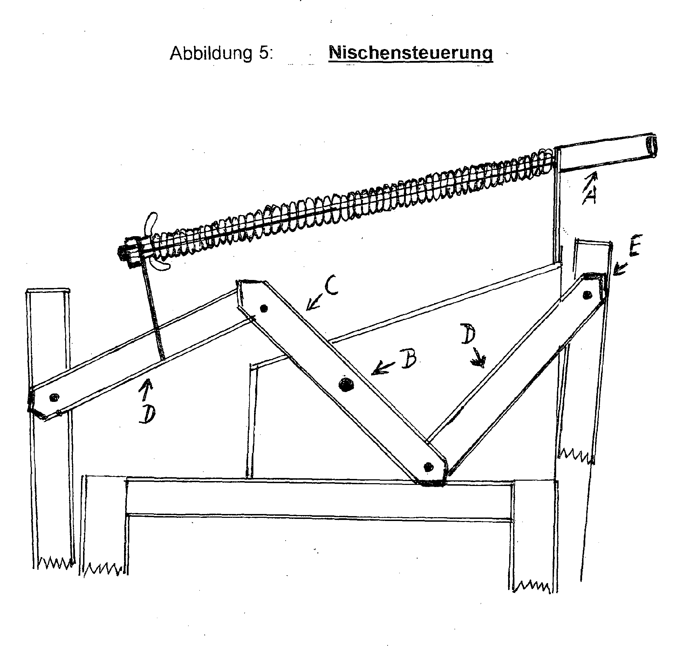

Die **Abbildung 5** zeigt die Nischensteuerung, über die sich die liegende Sau gegendruckgefedert Platz schaffen kann. Die Nischensteuerung befindet sich oben am Frontrahmen der Abferkelnische . Die Nischensteuerung vollzieht den Bewegungstransport der Ablegeschwingen, je nach Druckankuntsseite. Der Umlenkpunkt (B) stellt die Neutralbewegung dar. Das Druckübertragungspendel (C) sorgt dafür, dass die am oberen Bohrungspunkt ankommenden Kräfte, durch den gleichmäßigen Abstand zum unteren Bohrungspunkt, in gleicher Höhe an die Kraftweitergabegestänge abgegeben werden. Dadurch wird das gewünschte, spiegelverkehrte Öffnen und Schließen der Ablegeschwingen gewährleistet. Die Bewegungsdrücke kommen über Punkt E von der Ablegeschwinge am Bohrungspunkt an. E ist immer Druckempfangsseite, wenn dort die Ablegeschwinge von der Muttersau bewegt wird. Der Gegendruck wird durch eine am Höchstpunkt in ein Ovalohr (A) eingeführte Federstange aufgebaut. Durch eine Flügelschraube kann die Federspannung eingestellt werden.

### 6. Omega-Pylon

Der Omega-Pylon ist notwendig, um ein Abliegen der Sauen in Ferkelnestnähe zu verhindern. Die Halterung des Pylonenaufnahmeblocks ist mit 6 a bezeichnet und wird an der Pylonenträger-Ferkelnest-Kombination angeschroben bzw. angeschweißt.

Die Halterung (6a) ist ein senkrecht stehendes, mindestens 6 mm starkes Flacheisen. (A). In dieses Flacheisen ist dezentral ein Freischwingloch gebohrt, in welchem der Pylonenhalter angebracht wird. Dort kann dieser, angestoßen durch Stallbewohner, Nickbewegungen machen, die bis an die Freischwingbegrenzer (C) gehen können.

Am Pylonenhalter (6b und 6c) ist, ebenfalls dezentral, ein Freischwingbolzen angebracht. Dieser Freischwingbolzen wird durch das große Halterungsloch geführt. Im oberen Flachteil des Pylonenhalters sind zwei Löcher vorhanden. Dort wird mittels Schrauben eine Hartgummi-Matte omegaförmig, zum Abdecken sämtlichen Metalls des Pylons, befestigt. 6 d stellt das Aussehen des Omega-Pylons dar. A ist dort die Bezeichnung für die Hartgummimatte.

### Bezugszeichenliste

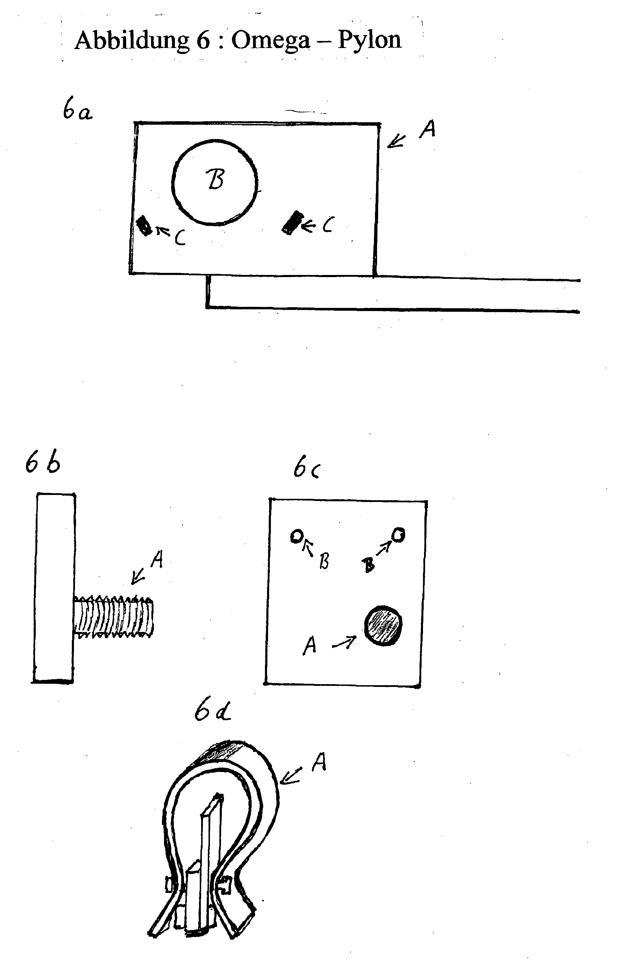

Abbildung 1: Nischenendteil
A: Kurzrohraufhängung
B: Kurzrohr
C: Aufhängerohr
D: Bolzenstecker
E: Bolzenanschlagspunkt
F: Endteilrahmen
G: Türschubhülsen
H: Eingangstür
I: waagerechte Schließungsrohre
J: Durchschubendpunkt
Abbildung 2: Stabilisierungs-Hochstange
A: Verbindungsrohr
B: senkrechte Winkeleisen
C: Flacheisen
Abbildung 3: Ablegeschwinge
A: Befestigungshülsen
B: dickwandiges Zollrohr
C: Kopfteilseite
D: Bewegungsdruck-Winkeleisen
E: Frontrahmen
Abbildung 4: Pylonenträger-Ferkelnest-Kombination
A: Aufnahmeflacheisen für Einzelpylonen
B: Befestigungs-Flacheisen
C: Scharnieraufnahme
D: Winkelrahmen
E: Bodenwinkeleisen
Abbildung 5: Nischensteuerung
A: Ovalrohr
B: Umlenkpunkt
C: Druckübertragungspendel
D: Kraftweitergabe-Gestänge
E: Druckempfangsseite
Abbildung 6 : Omega - Pylon
6 a: Pylonenaufnahmeblock,
Teil des Pylonenträger (Abbildung 4)
A. Verbindungssteifes, senkrechtes Flacheisen
B. Freischwingloch
C. Freischwingbegrenzer
6 b: Pylonenhalter (Seitenansicht)
A. Aufgeschweißter Freischwingbolzen
6c : Pylonenhalter (Totalansicht)
A. Aufgeschweißter Freischwingbolzen
B. Befestigungslöcher für den Hartgummi-Pylonen
6d: Omega-Pylon
Aufgeschrobener Hartgummi-Pylon

## Patentansprüche

1. Am Nischenendteil die neue waagerechte Kurzrohraufhängung in Kombination mit dem spiegelverkehrten Bolzenanschlagspunkt am verkürzten Aufhängerohr.

2. Die außen angeschrägten Türschubhülsen am Nischenendteil.

3. Die biegungsgradveränderten, waagerechten Schließungsrohre an den Türteilen.

4. Die dreiteilige Stabilisierungs-Hochstange mit den höhenverstellbaren Flacheisen.

5. Die winkelgebogene, einteilige Ablegeschwinge mit dem Frontteilzugewandten Bewegungsdruck-Winkeleisen

6. Die Pylonen-Ferkelnest-Kombination mit der Ferkelnestscharnier-Innenaufnahme und dem Wärmelampenschutz-Winkelrahmen.

7. Das Ovalrohr zum Verhindern des Festklemmens der Federführstange.

8. Die Gleichstellung der Bohrungsabstände an dem Druckübertragungspendel und den Kraftweitergabe-Gestängen an der Nischensteuerung.

9. Der Omega-Pylon
